# EUROPEAN PATENT SPECIFICATION

(11) **EP 2 735 510 B1**
(45) Date of publication and mention of the grant of the patent: **01.07.2015**
(21) Application number: 12194125.6
(22) Date of filing: 23.11.2012
(51) Int. Cl.: B64D 13/06, B64D 13/08

(54) **Aircraft air conditioning system and method of operating an aircraft air conditioning system**
Flugzeugklimaanlage und Verfahren für den Betrieb einer Flugzeugklimaanlage
Système de conditionnement d'air pour aéronef et procédé de fonctionnement d'un système de conditionnement d'air pour aéronef

(43) Date of publication of application: 28.05.2014
(73) Proprietor: Airbus Operations GmbH, 21129 Hamburg (DE)
(72) Inventor: Klimpel, Frank, 21129 Hamburg (DE); Golle, Steffen, 01069 Dresden (DE); Hesse, Ullrich, 01069 Dresden (DE)
(74) Representative: Schicker, Silvia

(56) References cited:
- DE-A1-102010 034 830
- US-A- 4 434 624
- US-A1- 2009 249 808
- US-A1- 2012 240 599

## Description

The present invention relates to an aircraft air conditioning system and a method of operating an aircraft air conditioning system.

So-called air-based air conditioning systems, as described for example in DE 10 2008 053 320 A1 and US 2010/101251 A1 or DE 10 2010 054 448 A1 and WO 2012/079756 A2, are usually used at present in commercial aircraft to air-condition the aircraft cabin. An aircraft air conditioning system serves to adequately cool or heat the aircraft cabin and to adequately supply fresh air into the aircraft cabin to ensure that a prescribed minimum proportion of oxygen is present in the aircraft cabin. Further, the humidity within the aircraft cabin is adjusted by means of the aircraft air conditioning system. Moreover, during flight operation of the aircraft, the aircraft air conditioning system is used to pressurize the aircraft cabin so as to maintain the pressure within the aircraft cabin, compared to the ambient pressure at the cruising altitude of the aircraft, at an elevated level.

Air-based air conditioning systems typically comprise an air conditioning unit, which is arranged, for example, in a wing root of the aircraft, and which is supplied with compressed process air that is generated by a compressor or bled off from an engine or an auxiliary power unit (APU) of the aircraft. During flight operation of the aircraft, usually engine bleed air is used so as to supply the air conditioning unit of the aircraft air conditioning system with compressed process air. During ground operation of the aircraft the air conditioning unit of the aircraft air conditioning system, however, typically is supplied with compressed process air from the auxiliary power unit of the aircraft. In the air conditioning unit, the process air, upon flowing through at least one heat exchanger as well as through various compression and expansion units, is cooled and expanded. Cooled process air exiting the air conditioning unit finally is supplied to a mixing chamber where it is mixed with recirculation air recirculated from an aircraft region to be air conditioned. The mixed air from the mixing chamber, via respective mixed air lines, is supplied to the aircraft region to be air conditioned which may be divided into a plurality of air conditioning zones.

US 4 434 624 A, which is considered the closet prior art, discloses an environmental control system comprising a ram air duct, a compressor for compressing air in the ram air duct, a Freon-evaporator for cooling air in the ram air duct, a condenser, a Freon compressor, a cabin air supply duct and a Freon cooling circuit in which the evaporator, the condenser and the compressor are arranged.

The invention is directed at the object of specifying an aircraft air conditioning system which is operable with high energy efficiency and at a high safety level. Further, the invention is directed at the object of providing a method of operating an aircraft air conditioning system of this kind.

This object is achieved by an aircraft air conditioning system having the features of Claim 1 and a method of operating an aircraft air conditioning system having the features of Claim 8.

An aircraft air conditioning system comprises an ambient air supply line allowing a flow of ambient air therethrough. The ambient air supply line may be directly connected to the ambient atmosphere. It is, however, also conceivable that the ambient air supply line branches off from a further ambient air conducting line or a ram air channel. The supply of ambient air into the ambient air supply line may be controlled by a suitable valve. The aircraft air conditioning system further comprises an ambient air cooling device which is connected to the ambient air supply line and which is adapted to cool the ambient air flowing through the ambient air supply line. For example, the ambient air cooling device may comprise a heat exchanger which allows cooling energy to be transferred to the ambient air flowing through the ambient air supply line.

An ambient air discharge line of the aircraft air conditioning system is connected to the ambient air cooling device and is connectable to an aircraft cabin so as to allow a supply of ambient air cooled by the ambient air cooling device to the aircraft cabin. Basically, the ambient air discharge line may be adapted to directly supply the ambient air flowing through the ambient air discharge line to the aircraft cabin. Preferably, however, the ambient air discharge line is connectable to the aircraft cabin via a mixing unit, wherein the ambient air flowing through the ambient air discharge line is mixed with recirculation air recirculated from the aircraft cabin, before a mixture of processed ambient air and recirculation air is guided to the aircraft cabin.

Further, the aircraft air conditioning system comprises a refrigerating apparatus which comprises a refrigerant circuit allowing the flow of a two-phase refrigerant therethrough. The refrigerating apparatus is designed to convert the two-phase refrigerant, upon flowing through the refrigerant circuit, from the liquid state of aggregation into the gaseous state of aggregation and thereafter again back from the gaseous state of aggregation into the liquid state of aggregation. In other words, the two-phase refrigerant which circulates in the refrigerant circuit of the refrigerating apparatus is a refrigerant, which, upon releasing cooling energy to a cooling energy consumer, is converted from the liquid to the gaseous state of aggregation and is then converted back to the liquid state of aggregation. The two-phase refrigerant may, for example, be R134A (CH₂F-CF₃), Galden^{®}, CO₂, R-245fa (1,1,1,3,3-Pentafluoropropane), or a low pressure HFC refrigerant.

The refrigerant circuit of the refrigerating apparatus is adapted to supply cooling energy to the ambient air cooling device. In the aircraft air conditioning system, the ambient air flowing through the ambient air supply line thus constitutes a cooling energy consumer which is supplied with the cooling energy released upon converting the two-phase refrigerant flowing through the refrigerant circuit of the refrigerating apparatus from the liquid state of aggregation to the gaseous state of aggregation. In an aircraft which is equipped with the aircraft air conditioning system described above, the aircraft cabin is supplied with clean ambient air enhancing the air quality within the aircraft cabin. Further, due to the high cooling capacity of the refrigerating apparatus being operated with a two-phase refrigerant, the aircraft air conditioning system may be operated with particularly high energy efficiency.

The refrigerant apparatus of the aircraft air conditioning system may comprise a refrigerant compressor for compressing the two-phase refrigerant circulating through the refrigerant circuit of the refrigerating apparatus. The refrigerant compressor may, for example, be designed in the form of a radial compressor. Further, the refrigerant apparatus may comprise a refrigerant liquefier for liquefying the two-phase refrigerant circulating through the refrigerant circuit of the refrigerating apparatus. Preferably, the refrigerant liquefier is thermally coupled to a ram air channel such that cooling energy from ram air flowing through the ram air channel may be supplied to the refrigerant liquefier. For example, the refrigerant liquefier may be designed in the form of a heat exchanger which is disposed in the ram air channel. Moreover, the refrigerant apparatus may comprise an expansion valve.

In a preferred embodiment of the aircraft air conditioning system, the ambient air cooling device is designed in the form of a refrigerant evaporator disposed in the refrigerant circuit of the refrigerant apparatus. For example, the ambient air cooling device may comprise a heat exchanger wherein the ambient air flowing through the ambient air supply line and the two-phase refrigerant circulating through the refrigerant circuit of the refrigerating apparatus are bought into thermal contact with each other. Upon flowing through the heat exchanger of the ambient air cooling device, the two-phase refrigerant is converted from the liquid state of aggregation to the gaseous state of aggregation and thereby releases cooling energy to the ambient air supplied to the ambient air cooling device via the ambient air supply line.

The refrigerating apparatus may comprise a control unit which is adapted to control the operation of the refrigerant apparatus, i.e. the refrigerant compressor, the refrigerant liquefier, the expansion valve and the refrigerant evaporator such that the cold vapor process executed in the refrigerating apparatus substantially is executed in the two-phase area of the refrigerant, whereby the isothermals and the isobars coincide. As a result, a process converges to the theoretical optimum Carnot process. This allows the efficiency and the cooling capacity of the refrigerating apparatus to be optimized.

The aircraft air conditioning system further comprises a bleed air supply line allowing a flow of bleed air bled off from an engine or an APU therethrough. The flow of bleed air through the bleed air supply line may, for example, be controlled by means of a suitable valve. Further, a bleed air turbine is present, which is driven by the bleed air flowing through the bleed air supply line. The bleed air turbine is coupled to the refrigerant compressor of the refrigerating apparatus so as to drive the refrigerant compressor of the refrigerating apparatus. In the aircraft air conditioning system bleed air bled off from an engine or an auxiliary power unit of the aircraft thus is not introduced into the aircraft cabin, but is used to drive the refrigerant compressor of the refrigerating apparatus. An aircraft which is equipped with an air-based air conditioning system thus can be equipped with the aircraft air conditioning system according to the invention without excessive system changes being necessary. The bleed air turbine may be specifically designed in dependence on the driving requirements of the refrigerant compressor and hence can be operated with a high efficiency. As a result, less bleed air has to be bled off from the engine or the auxiliary power unit of the aircraft decreasing the fuel consumption of an aircraft equipped with the aircraft air conditioning. For example, the bleed air turbine and the refrigerant compressor may be disposed on a common shaft.

The aircraft air conditioning system may further comprise a bleed air discharge line which is connected to the bleed air turbine and which further is connectible to the ambient atmosphere so as to allow the bleed air supplied to the bleed air turbine via the bleed air supply line, after passing the bleed air turbine, to be discharged to the ambient atmosphere. If desired, the bleed air discharge line may be directly connected to the ambient atmosphere. Preferably, however, the bleed air discharge line opens into the ram air channel which, as discussed above, serves to supply ram air to the refrigerant liquefier for cooling the two-phase refrigerant circulating through the refrigerant circuit of the refrigerating apparatus. For example, the bleed air discharge line may open into the ram air channel downstream of the refrigerant liquefier and upstream of a pre-cooler which will be described in greater detail below.

An ambient air compressor may be disposed in the ambient air supply line of the aircraft air conditioning system. The ambient air compressor may be designed in the form of a radial compressor. Preferably, the ambient air compressor comprises a plurality of compressor stages, for example two compressor stages. At least one bypass arrangement may be provided which allows at least one of the compressor stages to be bypassed. An ambient air compressor comprising multiple compressor stages is in particular suitable to provide compressed ambient air at a constant pressure level although the pressure of the ambient air supplied to the ambient air compressor varies at different cruising altitudes of the aircraft. For example, a first compressor stage may be bypassed and the ambient air flowing through the ambient air supply line may be directly supplied to a second compressor stage of the ambient air compressor, when the aircraft is on the ground or cruises at low altitude. To the contrary, the ambient air flowing through the ambient air supply line may be supplied to a first compressor stage of the ambient air compressor so as to be pre-compressed and thereafter be supplied to a second compressor stage of the ambient air compressor to be compressed to a desired pressure level, when the aircraft is cruising at a high altitude and the pressure of the ambient air thus is low.

Further, a pre-cooler may be disposed in the ambient air supply line. Preferably, the pre-cooler is disposed in the ambient air supply line upstream of the ambient air cooling device and serves to pre-cool the ambient air flowing through the ambient air supply line before the ambient air is supplied to the ambient air cooling device. A bypass arrangement may be provided which allows the ambient air flowing through the ambient air supply line to bypass the pre-cooler in case a pre-cooling of the ambient air is not desired. Preferably, the pre-cooler is thermally coupled to the ram air channel which also serves to provide cool ram air to the refrigerant liquefier of the refrigerating apparatus. Similar to the refrigerant liquefier, the pre-cooler may be designed in the form of a heat exchanger and may be disposed in the ram air channel.

During flight operation of the aircraft, the ram pressure building up in a region of an inlet of the ram air channel provides for a supply of ambient air into the ram air channel. To ensure a sufficient flow of ambient air through the ram air channel also during ground operation of the aircraft, a conveying device which may, for example, be designed in the form of a fan or a blower, may be disposed in the ram air channel, for example, downstream of the refrigerant liquefier and the pre-cooler. The conveying device may be driven by the bleed air turbine. For example, the conveying device may be disposed with the bleed air turbine on a common shaft.

In a preferred embodiment of the aircraft air conditioning system, the ambient air compressor is coupled to the bleed air turbine so as to be driven by the bleed air turbine. For example, the ambient air compressor may be disposed with the bleed air turbine on a common shaft.

A water separator may be disposed in the ambient air discharge line of the aircraft air conditioning system. For example, the water separator may be designed in the form of a high pressure separator and is disposed in the ambient air discharge line downstream of the ambient air cooling device so as to remove liquid water condensed from the ambient air stream upon being cooled in the ambient air cooling device. Liquid water removed from the ambient air stream in the water separator may be discharged into the ram air channel so as to be discharged to the ambient atmosphere, together with the ram air flowing through the ram air channel.

Further, an ambient air turbine may be disposed in the ambient air discharge line. The ambient air turbine serves to expand the ambient air to a pressure at which the ambient air may be supplied to the aircraft cabin. For example, the ambient air turbine may be disposed in the ambient air discharge line downstream of the water separator and upstream of a mixing unit, wherein the ambient air is mixed with recirculation air recirculated from the aircraft cabin before being supplied to the aircraft cabin. The ambient air turbine may be disposed with the bleed air turbine on a common shaft and hence, together with the bleed air turbine, may serve to drive at least one of the refrigerant compressor, the ambient air compressor and the conveying device disposed in the ram air channel.

In a method of operating an aircraft air conditioning system, a flow of ambient air is guided through an ambient air supply line. The ambient air flowing through the ambient air supply line is cooled by means of an ambient air cooling device. The ambient air cooled by the ambient air cooling device is supplied to an aircraft cabin via an ambient air discharge line. Cooling energy is supplied to the ambient air cooling device from a refrigerant circuit of a refrigerating apparatus, the refrigerant circuit allowing the flow of a two-phase refrigerant therethrough, and the refrigerating apparatus being designed to convert the two-phase refrigerant upon flowing through the refrigerant circuit, from the liquid state of aggregation into the gaseous state of aggregation and thereafter again back from the gaseous state of aggregation into the liquid state of aggregation.

The refrigerating apparatus comprises a refrigerant compressor, and may comprise a refrigerant liquefier and/or an expansion valve. Cooling energy from ram air flowing through a ram air channel may be supplied to the refrigerant liquefier which is thermally coupled to the ram air channel.

The ambient air flowing through the ambient air supply line may be cooled by means of an ambient air cooling device designed in the form of a refrigerant evaporator disposed in the refrigerant circuit of the refrigerating apparatus.

A flow of bleed air bled off from an engine or an auxiliary power unit is guided through a bleed air supply line. The refrigerant compressor of the refrigerating apparatus is driven by means of a bleed air turbine driven by the bleed air flowing through the bleed air supply line and being coupled to the refrigerant compressor of the refrigerating apparatus.

The bleed air supplied to the bleed air turbine via the bleed air supply line, after passing the bleed air turbine, may be discharged to the ambient atmosphere via a bleed air discharge line connected to the bleed air turbine and being connectable to the ambient atmosphere. The bleed air discharge line preferably opens into the ram air channel.

At least one of an ambient air compressor and a pre-cooler may be disposed in the ambient air supply line. Preferably, the ambient air compressor comprises a plurality of compressor stages. Cooling energy from ram air flowing through the ram air channel may be supplied to the pre-cooler which is thermally coupled to the ram air channel.

In a preferred embodiment of the method of operating an aircraft air conditioning system, the bleed air turbine drives at least one of the refrigerant compressor, the ambient air compressor and a conveying device for conveying ram through the ram air channel.

In addition, an ambient air turbine may be disposed in the ambient air discharge line which expands the ambient air to a pressure at which the ambient air may be supplied to the aircraft cabin. The ambient air turbine may drive at least one of the refrigerant compressor, the ambient air compressor and the conveying device disposed in the ram air channel.

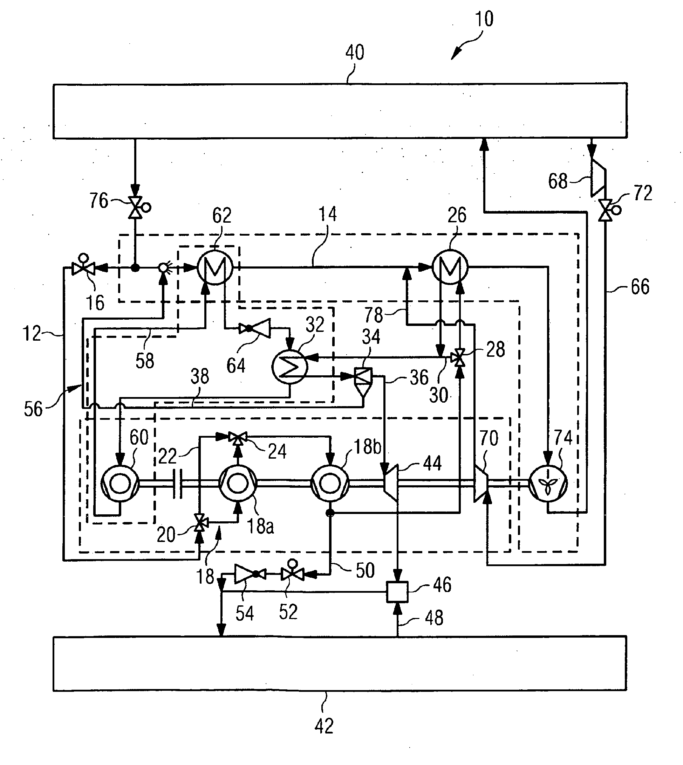

A preferred embodiment of the invention now is described in greater detail with reference to the appended schematic drawing, wherein
Figure 1 shows a schematic representation of an aircraft air conditioning system.

An aircraft air conditioning system 10 according to Figure 1 comprises an ambient air supply line 12. The ambient air supply line 12 branches off from a ram air channel 14, wherein the supply of ambient air from the ram air channel 14 into the ambient air supply line 12 is controlled by means of a valve 16. Downstream of the valve 16, an ambient air compressor 18 is disposed in the ambient air supply line 12 which serves to compress the ambient air flowing through the ambient air supply line 12.

The ambient air compressor 18 comprises a first compressor stage 18a and a second compressor stage 18b. A bypass arrangement comprising a first bypass valve 20, a bypass line 22 and a second bypass valve 24 serves to bypass the first compressor stage 18a, if desired. During operation of the aircraft air conditioning system 10, the ambient air compressor 18 is operated so as to compress the ambient air flowing through the ambient air supply line 12 to substantially constant pressure level. When an aircraft equipped with the aircraft air conditioning system 10 is operated on the ground and hence the pressure of the ambient air flowing through the ambient air supply line is relatively high, the first compressor stage 18a may be bypassed. During flight operation of the aircraft, the pressure of the ambient air flowing through the ambient air supply line 12 is relatively low. Hence, the ambient air first is supplied to the first compressor stage 18 wherein it is pre-compressed and thereafter directed to the second compressor stage 18b wherein it is finally compressed to the desired pressure.

Downstream of the ambient air compressor 18, a pre-cooler 26 is disposed in the ambient air supply line 12. The pre-cooler 26 serves to pre-cool the ambient air flowing through the ambient air supply line 12 and, in case a pre-cooling of the ambient air is not required, may be bypassed by means of a bypass valve 28 and a bypass line 30. The pre-cooler 26 is designed in the form of a heat exchanger which is disposed in the ram air channel 14. Thus, the ambient air supplied to the pre-cooler 26 via the ambient air supply line 12 in the pre-cooler 26 is cooled by transferring heat from the ambient air to the ram air flowing through the ram air channel 14.

Downstream of the pre-cooler 26, the ambient air supply line 20 opens into an ambient air cooling device 32. Upon flowing through the ambient air cooling device 32, the ambient air is cooled to a desired temperature. Liquid water which condenses from the flow of ambient air upon being cooled in the ambient air cooling device 32 is separated from the ambient air flow in a water separator 34 which is disposed in an ambient air discharge line 36 downstream of the ambient air cooling device 32. In the embodiment of an aircraft air conditioning system 10 according to Figure 1, the water separator 34 is designed in the form of a high pressure separator. Liquid water separated from the ambient air flow in the water separator 34, via a water discharge line 38, is discharged into the ram air channel 14. In the ram air channel 14, the liquid water, together with the ram air flowing through the ram air channel 14, is conveyed through the ram air channel 14 and finally discharged to the ambient atmosphere 40.

The ambient air discharge line 36 connects the ambient air cooling device 32 to an aircraft cabin 42. Downstream of the water separator 34, an ambient air turbine 44 is disposed in the ambient air discharge line 36 which serves to expand the ambient air flowing through the ambient air discharge line 36 to a desired pressure, at which the ambient air may be supplied to the aircraft cabin 42. Prior to being introduced into the aircraft cabin 42, the ambient air expanded in the ambient air turbine 44, in a mixing unit 46, is mixed with recirculation air recirculated into the mixing unit 46 from the aircraft cabin 42 via a recirculation air line 48. From the mixing unit 46, a mixture of ambient air and recirculation air finally is introduced into the aircraft cabin 42. A trim air line 50, wherein a control valve 52 for controlling a flow of trim air through the trim air line 50 and an expansion valve 54 are disposed, branches off from the ambient air supply line 12 downstream of the ambient air compressor 18 and opens into the ambient air discharge line 36 downstream of the mixing unit 46.

The aircraft air conditioning system 10 further comprises a refrigerating apparatus 56 which is equipped with a refrigerant circuit 58. A two-phase refrigerant, for example R134A (CH₂F-CF₃), Galden^{®}, CO₂, R-245fa (1,1,1,3,3-Pentafluoropropane), or a low pressure HFC refrigerant, circulates through the refrigerating circuit 58 of the refrigerating apparatus 56. A refrigerant compressor 60, a refrigerant liquefier 62 and an expansion valve 64 are disposed in the refrigerating circuit 58. The refrigerant compressor 60 is designed in the form of a radial compressor and serves to compress the two-phase refrigerant flowing through the refrigerant circuit 58. The refrigerant liquefier 62 is designed in the form of a heat exchanger and is disposed in the ram air channel 14 such that the two-phase refrigerant, upon flowing through the refrigerant liquefier 62, is cooled by the ram air flowing through the ram air channel 14.

The ambient air cooling device 32 is designed in the form of a refrigerant evaporator disposed in the refrigerant circuit 58 of the refrigerating apparatus 56. Thus, the ambient air supplied to the ambient air cooling device 32 via the ambient air supply line 12, in the ambient air cooling device 32 is cooled by the cooling energy released by the two-phase refrigerant upon being converted from the liquid to the gaseous state of aggregation due to the transfer of thermal energy from the ambient air flowing through the ambient air supply line 12. The ambient air cooling device 32 is designed in the form of a heat exchanger and provides for a thermal contact between the two-phase refrigerant flowing through the refrigerant circuit 58 of the refrigerating apparatus 56 and the ambient air supplied to the ambient air cooling device 32 via the ambient air supply line 12. The refrigerating circuit 58, however, is not in fluid communication with the ambient air.

The aircraft air conditioning system 10 further comprises a bleed air supply line 66 which supplies bleed air bled off from an engine 68 of the aircraft to a bleed air turbine 70. The flow of bleed air through the bleed air supply line 66 is controlled by means of a valve 72. The bleed air turbine 70 is disposed on a common shaft with the ambient air turbine 44, the first and the second compressor stages 18a, 18b of the ambient air compressor 18 and the refrigerant compressor 60 of the refrigerating apparatus 56. Hence, the bleed air turbine 70 and the ambient air turbine 44 provide the driving energy for driving the first and the second compressor stage 18a, 18b of the ambient air compressor 18 and the refrigerant compressor 60 of the refrigerating apparatus 56.

The bleed air turbine 70 and the ambient air turbine 44 are also disposed on a common shaft with a conveying device 72 which is designed in the form of a fan and disposed in the ram air channel 14. The conveying device 74 serves to convey ram air through the ram air channel 14, in particular during ground operation of a the aircraft. The flow of ram air through the ram air channel 14 is controlled by means of a valve 76 which, for example, may be designed in form of a ram air channel inlet flap.

Finally, the aircraft air conditioning system 10 comprises a bleed air discharge line 78 which is connected to the bleed air turbine 70 and which opens into the ram air channel 14. Via the bleed air discharge line 78 and the ram air channel 14, the bleed air supplied to the bleed air turbine 70 via the bleed air supply line 60, after passing the bleed air turbine 70, is discharged to the ambient atmosphere 40. As becomes apparent from Figure 1, the bleed air discharge line 78 opens into the ram air channel 14 downstream of the refrigerant liquefier 62, but upstream of the pre-cooler 26, such that the ambient air flowing through the pre-cooler 26 is cooled by cooling energy transfer from both, the ram air flowing through the ram air channel 14 and the expanded bleed air discharged into the ram air channel 14 via the bleed air discharge line 78.

## Claims

1. Aircraft air conditioning system (10) comprising:
- an ambient air supply line (12) allowing a flow of ambient air therethrough,
- an ambient air cooling device (32) connected to the ambient air supply line (12) and being adapted to cool the ambient air flowing through the ambient air supply line (12),
- an ambient air discharge line (36) connected to the ambient air cooling device (32) and being connectable to an aircraft cabin (42) so as to allow a supply of ambient air cooled by the ambient air cooling device (32) to the aircraft cabin (42), and
- a refrigerating apparatus (56) which comprises a refrigerant circuit (58) allowing the flow of a two-phase refrigerant therethrough and which is designed to convert the two-phase refrigerant, upon flowing though the refrigerant circuit (58), from the liquid state of aggregation into the gaseous state of aggregation and thereafter again back from the gaseous state of aggregation into the liquid state of aggregation, and a refrigerant compressor (60) for compressing the two-phase refrigerant, the refrigerant circuit (58) of the refrigerating apparatus (56) being adapted to supply cooling energy to the ambient air cooling device (32)
**characterized in that** the aircraft air conditioning system (10) further comprises:
- a bleed air supply line (66) allowing a flow of bleed air bled off from an engine (68) or an auxiliary power unit therethrough, and
- a bleed air turbine (70) driven by the bleed air flowing through the bleed air supply line (66) and being coupled to the refrigerant compressor (60) of the refrigerating apparatus (56) so as to drive the refrigerant compressor (60) of the refrigerating apparatus (56).

2. The aircraft air conditioning system according to claim 1,
wherein the refrigerating apparatus (56) comprises a refrigerant liquefier (62) and/or an expansion valve (64), wherein the refrigerant liquefier (62) preferably is thermally coupled to a ram air channel (14) so as to supply cooling energy from ram air flowing through the ram air channel (14) to the refrigerant liquefier (62).

3. The aircraft air conditioning system according to claim 1 or 2,
wherein the ambient air cooling device (32) is designed in the form of a refrigerant evaporator disposed in the refrigerant circuit (58) of the refrigerating apparatus (56).

4. The aircraft air conditioning system according to any one of claims 1 to 3, further comprising:
- a bleed air discharge line (78) connected to the bleed air turbine (70) and being connectable to the ambient atmosphere (40) so as to allow the bleed air supplied to the bleed air turbine (70) via the bleed air supply line (66), after passing the bleed air turbine (70), to be discharged to the ambient atmosphere (40), wherein the bleed air discharge line (78) preferably opens into the ram air channel (14).

5. The aircraft air conditioning system according to any one of claims 1 to 4,
wherein an ambient air compressor (18) and/or a pre-cooler (26) is/are disposed in the ambient air supply line (12), wherein the ambient air compressor (18) preferably comprises a plurality of compressor stages (18a, 18b), and/or wherein the pre-cooler (26) preferably is thermally coupled to the ram air channel (14) so as to supply cooling energy from ram air flowing through the ram air channel (14) to the pre-cooler (26).

6. The aircraft air conditioning system according to claim 5,
wherein the ambient air compressor (18) is coupled to the bleed air turbine (70) so as to be driven by the bleed air turbine (70).

7. The aircraft air conditioning system according to any one of claims 1 to 6,
wherein a water separator (34) and/or an ambient air turbine (44) is/are disposed in the ambient air discharge line (36).

8. A method of operating an aircraft air conditioning system (10) comprising the steps:
- guiding a flow of ambient air through an ambient air supply line (12),
- cooling the ambient air flowing through the ambient air supply line (12) by means of an ambient air cooling device (32),
- supplying the ambient air cooled by the ambient air cooling device (32) to an aircraft cabin via an ambient air discharge line (36),
- supplying cooling energy to the ambient air cooling device (32) from a refrigerant circuit (58) of a refrigerating apparatus (56), the refrigerant circuit (58) allowing the flow of a two-phase refrigerant therethrough, and the refrigerating apparatus (56) being designed to convert the two-phase refrigerant, upon flowing though the refrigerant circuit (58), from the liquid state of aggregation into the gaseous state of aggregation and thereafter again back from the gaseous state of aggregation into the liquid state of aggregation,
**characterized in that** the method further comprises the steps:
- guiding a flow of bleed air bled off from an engine (68) or an auxiliary power unit through a bleed air supply line (66), and
- driving a refrigerant compressor (60) of the refrigerating apparatus (56) by means of a bleed air turbine (70) driven by the bleed air flowing through the bleed air supply line (66) and being coupled to the refrigerant compressor (60) of the refrigerating apparatus (56).

9. The method according to claim 8,
wherein the refrigerating apparatus (56) comprises a refrigerant liquefier (62) and/or an expansion valve (64), wherein preferably cooling energy from ram air flowing through a ram air channel (14) is supplied to the refrigerant liquefier (62) which is thermally coupled to the ram air channel (14).

10. The method according to claim 8 or 9,
wherein the ambient air flowing through the ambient air supply line (12) is cooled by means of an ambient air cooling device (32) designed in the form of a refrigerant evaporator disposed in the refrigerant circuit (58) of the refrigerating apparatus (56).

11. The method according to any one of claims 8 to 10,
further comprising:
- discharging the bleed air supplied to the bleed air turbine (70) via the bleed air supply line (66), after passing the bleed air turbine (70), to the ambient atmosphere (40) via a bleed air discharge line (78) connected to the bleed air turbine (70) and being connectable to the ambient atmosphere (40), wherein the bleed air discharge line (78) preferably opens into the ram air channel (14).

12. The method according to any one of claims 8 to 11,
wherein an ambient air compressor (18) and a pre-cooler (26) is/are disposed in the ambient air supply line (12), wherein the ambient air compressor (18) preferably comprises a plurality of compressor stages (18a, 18b), and/or wherein preferably cooling energy from ram air flowing through the ram air channel (14) is supplied to the pre-cooler (26) which is thermally coupled to the ram air channel (14).

13. The method according to claim 12,
wherein the bleed air turbine (70) drives the ambient air compressor (18).

## Patentansprüche

1. Flugzeugklimaanlage (10), die umfasst:
- eine Umgebungsluftzufuhrleitung (12), die von Umgebungsluft durchströmbar ist,
- ein Umgebungsluftkühlgerät (32), das mit der Umgebungsluftzufuhrleitung (12) verbunden und das dazu eingerichtet ist, die Umgebungsluft, die die Umgebungsluftzufuhrleitung (12) durchströmt, zu kühlen,
- eine Umgebungsluftabfuhrleitung (36), die mit dem Umgebungsluftkühlgerät (32) verbunden ist und die mit einer Flugzeugkabine (42) verbindbar ist, um die Zufuhr von durch das Umgebungsluftkühlgerät (32) gekühlter Umgebungsluft zu der Flugzeugkabine (42) zu ermöglichen, und
- eine Kältemaschine (56), die einen von einem zweiphasigen Kältemittel durchströmbaren Kältemittelkreislauf (58), der dazu eingerichtet ist, das zweiphasige Kältemittel beim Durchströmen des Kältemittelkreislaufs (58) vom flüssigen Aggregatzustand in den gasförmigen Aggregatzustand und anschließend vom gasförmigen Aggregatzustand wieder zurück in den flüssigen Aggregatzustand zu konvertieren, und einen Kältemittelkompressor (60) zum Komprimieren des zweiphasigen Kältemittels umfasst, wobei der Kältemittelkreislauf (58) der Kältemaschine (56) dazu eingerichtet ist, dem Umgebungsluftkühlgerät (32) Kühlenergie zuzuführen,
**dadurch gekennzeichnet, dass** die Flugzeugklimaanlage (10) ferner umfasst:
- eine Zapfluftzufuhrleitung (66), die von Zapfluft, die von einem Triebwerk (68) oder einem Hilfstriebwerk abgezapft wird, durchströmbar ist, und
- eine Zapfluftturbine (70), die durch die Zapfluft angetrieben wird, die die Zapfluftzufuhrleitung (66) durchströmt, und die mit dem Kältemittelkompressor (60) der Kältemaschine (56) gekoppelt ist, um den Kältemittelkompressor (60) der Kältemaschine (56) anzutreiben.

2. Flugzeugklimaanlage gemäß Anspruch 1,
wobei die Kältemaschine (56) einen Kältemittelverflüssiger (62) und/oder ein Expansionsventil (64) umfasst, wobei der Kältemittelverflüssiger (62) vorzugsweise thermisch mit einem Stauluftkanal (14) gekoppelt ist, um dem Kühlmittelverflüssiger (62) Kühlenergie von Stauluft zuzuführen, die den Stauluftkanal (14) durchströmt.

3. Flugzeugklimaanlage gemäß Anspruch 1 oder 2,
wobei das Umgebungsluftkühlgerät (32) in Form eines Kältemittelverdampfers ausgebildet ist, der in dem Kältemittelkreislauf (58) der Kältemaschine (56) angeordnet ist.

4. Flugzeugklimaanlage gemäß einem der Ansprüche 1 bis 3, die ferner umfasst:
- eine Zapfluftabfuhrleitung (78), die mit der Zapflufturbine (70) verbunden ist und die mit der Umgebungsatmosphäre (40) verbindbar ist, so dass ermöglicht wird, dass die Zapfluft, die der Zapflufturbine (70) über die Zapfluftzufuhrleitung (66) zugeführt wird, nach dem Durchströmen der Zapflufturbine (70) an die Umgebungsatmosphäre (40) abgeführt wird, wobei die Zapfluftabfuhrleitung (78) vorzugsweise in den Stauluftkanal (14) mündet.

5. Flugzeugklimaanlage gemäß einem der Ansprüche 1 bis 4,
wobei ein Umgebungsluftkompressor (18) und/oder ein Vorkühler (26) in der Umgebungsluftzufuhrleitung (12) angeordnet ist/sind, wobei der Umgebungsluftkompressor (18) vorzugsweise eine Mehrzahl von Kompressorstufen (18a, 18b) umfasst und/oder wobei der Vorkühler (26) vorzugsweise thermisch mit dem Stauluftkanal (14) gekoppelt ist, um dem Vorkühler (26) Kühlenergie von Stauluft zuzuführen, die den Stauluftkanal (14) durchströmt.

6. Flugzeugklimaanlage gemäß Anspruch 5,
wobei der Umgebungsluftkompressor (18) mit der Zapflufturbine (70) gekoppelt ist, um von der Zapflufturbine (70) angetrieben zu werden.

7. Flugzeugklimaanlage gemäß einem der Ansprüche 1 bis 6,
wobei ein Wasserabscheider (34) und/oder eine Umgebungsluftturbine (44) in der Umgebungsluftabfuhrleitung (36) angeordnet ist/sind.

8. Verfahren zum Betreiben einer Flugzeugklimaanlage (10), das die folgenden Schritte umfasst:
- Zuführen eines Umgebungsluftstroms durch eine Umgebungsluftzufuhrleitung (12),
- Kühlen der die Umgebungsluftzufuhrleitung (12) durchströmenden Umgebungsluft mittels eines Umgebungsluftkühlgeräts (32),
- Zuführen der durch das Umgebungsluftkühlgerät (32) gekühlten Umgebungsluft zu einer Flugzeugkabine durch eine Umgebungsluftabfuhrleitung (36),
- Zuführen von Kühlenergie zu dem Umgebungsluftkühlgerät (32) von einem Kältemittelkreislauf (58) einer Kältemaschine (56), wobei der Kältemittelkreislauf (58) von einem zweiphasigen Kältemittel durchströmbar ist und die Kältemaschine (56) dazu eingerichtet ist, das zweiphasige Kältemittel beim Durchströmen des Kältemittelkreislaufs (58) vom flüssigen Aggregatzustand in den gasförmigen Aggregatzustand und anschließend vom gasförmigen Aggregatzustand wieder zurück in den flüssigen Aggregatzustand zu konvertieren,
**dadurch gekennzeichnet, dass** das Verfahren ferner die Schritte umfasst:
- Leiten eines Zapfluftstroms, der von einem Triebwerk (68) oder einem Hilfstriebwerk abgezapft wird, durch eine Zapfluftzufuhrleitung (66), und
- Antreiben eines Kältemittelkompressors (60) der Kältemaschine (56) mittels einer Zapfluftturbine (70), die durch die Zapfluft angetrieben wird, die die Zapfluftzufuhrleitung (66) durchströmt, und die mit dem Kältemittelkompressor (60) der Kältemaschine (56) gekoppelt ist.

9. Verfahren gemäß Anspruch 8,
wobei die Kältemaschine (56) einen Kältemittelverflüssiger (62) und/oder ein Expansionsventil (64) umfasst, wobei vorzugsweise Kühlenergie von Stauluft, die einen Stauluftkanal (14) durchströmt, dem Kühlmittelverflüssiger (62) zugeführt wird, der thermisch mit dem Stauluftkanal (14) gekoppelt ist.

10. Verfahren gemäß Anspruch 8 oder 9,
wobei die die Umgebungsluftzufuhrleitung (12) durchströmende Umgebungsluft mittels eines Umgebungsluftkühlgeräts (32) gekühlt wird, das in Form eines Kältemittelverdampfers ausgebildet ist, der in dem Kältemittelkreislauf (58) der Kältemaschine (56) angeordnet ist.

11. Verfahren gemäß einem der Ansprüche 8 bis 10,
das ferner umfasst:
- Abführen der Zapfluft, die der Zapflufturbine (70) über die Zapfluftzufuhrleitung (66) zugeführt wird, nach dem Durchströmen der Zapflufturbine (70) an die Umgebungsatmosphäre (40) über eine Zapfluftabfuhrleitung (78), die mit der Zapflufturbine (70) verbunden ist und die mit der Umgebungsatmosphäre (40) verbindbar ist, wobei die Zapfluftabfuhrleitung (78) vorzugsweise in den Stauluftkanal (14) mündet.

12. Verfahren gemäß einem der Ansprüche 8 bis 11,
wobei ein Umgebungsluftkompressor (18) und/oder ein Vorkühler (26) in der Umgebungsluftzufuhrleitung (12) angeordnet ist/sind, wobei der Umgebungsluftkompressor (18) vorzugsweise eine Mehrzahl von Kompressorstufen (18a, 18b) umfasst und/oder wobei vorzugsweise Kühlenergie von Stauluft, die den Stauluftkanal (14) durchströmt, dem Vorkühler (26) zugeführt wird, der thermisch mit dem Stauluftkanal (14) gekoppelt ist.

13. Verfahren gemäß Anspruch 12,
wobei die Zapflufturbine (70) den Umgebungsluftkompressor (18) antreibt.

## Revendications

1. Système (10) de conditionnement d'air pour aéronef comprenant :
- une conduite (12) d'alimentation en air ambiant permettant une circulation de l'air ambiant à travers celle-ci,
- un dispositif (32) de refroidissement d'air ambiant connecté à la conduite (12) d'alimentation en air ambiant et étant adapté pour refroidir l'air ambiant circulant à travers la conduite (12) d'alimentation en air ambiant,
- une conduite (36) d'évacuation d'air ambiant connectée au dispositif (32) de refroidissement d'air ambiant et pouvant être raccordée à une cabine d'aéronef (42) de façon à permettre une alimentation en air ambiant refroidi par le dispositif (32) de refroidissement d'air ambiant vers la cabine d'aéronef (42), et
- un appareil frigorifique (56) qui comprend un circuit frigorifique (58) permettant la circulation d'un fluide frigorigène de type diphasique à travers celui-ci et qui est conçu pour convertir le fluide frigorigène de type diphasique, sur circulation à travers le circuit frigorifique (58), de l'état d'agrégation liquide à l'état d'agrégation gazeux et par la suite à nouveau de l'état d'agrégation gazeux à l'état d'agrégation liquide, et un compresseur frigorifique (60) destiné à comprimer le fluide frigorigène de type diphasique, le circuit frigorifique (58) de l'appareil frigorifique (56) étant adapté pour délivrer l'énergie de refroidissement vers le dispositif (32) de refroidissement d'air ambiant,
**caractérisé en ce que** le système (10) de conditionnement d'air pour aéronef comprend en outre :
- une conduite (66) d'alimentation en air de prélèvement permettant une circulation de l'air de prélèvement prélevé d'un moteur (68) ou d'une unité de puissance auxiliaire à travers celle-ci, et
- une turbine (70) d'air de prélèvement entraînée par l'air de prélèvement circulant à travers la conduite (66) d'alimentation en air de prélèvement et étant couplée au compresseur frigorifique (60) de l'appareil frigorifique (56) de façon à entraîner le compresseur frigorifique (60) de l'appareil frigorifique (56).

2. Système de conditionnement d'air pour aéronef selon la revendication 1,
dans lequel l'appareil frigorifique (56) comprend un liquéfacteur (62) de fluide frigorigène et/ou une soupape de détente (64), dans lequel le liquéfacteur (62) de fluide frigorigène est de préférence thermiquement couplé à un canal (14) d'air dynamique de façon à délivrer l'énergie de refroidissement de l'air dynamique circulant à travers le canal (14) d'air dynamique au liquéfacteur (62) de fluide frigorigène.

3. Système de conditionnement d'air pour aéronef selon la revendication 1 ou 2,
dans lequel le dispositif (32) de refroidissement d'air ambiant est conçu sous la forme d'un évaporateur de fluide frigorigène disposé dans le circuit frigorifique (58) de l'appareil frigorifique (56).

4. Système de conditionnement d'air pour aéronef selon l'une quelconque des revendications 1 à 3, comprenant en outre :
- une conduite (78) d'évacuation d'air de prélèvement raccordée à la turbine (70) d'air de prélèvement et pouvant être raccordée à l'atmosphère ambiante (40) de façon à permettre à l'air de prélèvement délivré vers la turbine (70) d'air de prélèvement via la conduite (66) d'alimentation en air de prélèvement, après avoir passé la turbine (70) d'air de prélèvement, d'être évacué vers l'atmosphère ambiante (40), dans lequel la conduite (78) d'évacuation d'air de prélèvement s'ouvre de préférence dans le canal (14) d'air dynamique.

5. Système de conditionnement d'air pour aéronef selon l'une quelconque des revendications 1 à 4,
dans lequel un compresseur (18) d'air ambiant et/ou un prérefroidisseur (26) est/sont disposé(s) dans la conduite (12) d'alimentation en air ambiant, dans lequel le compresseur (18) d'air ambiant comprend de préférence une pluralité d'étages (18a, 18b) de compresseur, et/ou dans lequel le prérefroidisseur (26) est de préférence couplé thermiquement au canal (14) d'air dynamique de façon à délivrer l'énergie de refroidissement de l'air dynamique circulant à travers le canal (14) d'air dynamique au prérefroidisseur (26).

6. Système de conditionnement d'air pour aéronef selon la revendication 5,
dans lequel le compresseur (18) d'air ambiant est couplé à la turbine (70) d'air de prélèvement de façon à être entraîné par la turbine (70) d'air de prélèvement.

7. Système de conditionnement d'air pour aéronef selon l'une quelconque des revendications 1 à 6,
dans lequel un séparateur d'eau (34) et/ou une turbine (44) d'air ambiant est/sont disposé(s) dans la conduite (36) d'évacuation d'air ambiant.

8. Procédé de fonctionnement d'un système (10) de conditionnement d'air pour aéronef comprenant les étapes consistant à :
- guider une circulation de l'air ambiant à travers une conduite (12) d'alimentation en air ambiant,
- refroidir l'air ambiant circulant à travers la conduite (12) d'alimentation en air ambiant au moyen d'un dispositif (32) de refroidissement d'air ambiant,
- délivrer l'air ambiant refroidi par le dispositif (32) de refroidissement d'air ambiant vers une cabine d'aéronef via une conduite (36) d'évacuation d'air ambiant,
- délivrer l'énergie de refroidissement vers le dispositif (32) de refroidissement d'air ambiant à partir d'un circuit frigorifique (58) d'un appareil frigorifique (56), le circuit frigorifique (58) permettant la circulation d'un fluide frigorigène de type diphasique à travers celui-ci, et l'appareil frigorifique (56) étant conçu pour convertir le fluide frigorigène de type diphasique, sur circulation à travers le circuit frigorifique (58), de l'état d'agrégation liquide à l'état d'agrégation gazeux et par la suite à nouveau de l'état d'agrégation gazeux à l'état d'agrégation liquide,
**caractérisé en ce que** le procédé comprend en outre les étapes consistant à :
- guider une circulation de l'air de prélèvement prélevé d'un moteur (68) ou d'une unité de puissance auxiliaire à travers une conduite (66) d'alimentation en air de prélèvement, et
- entraîner un compresseur frigorifique (60) de l'appareil frigorifique (56) au moyen d'une turbine (70) d'air de prélèvement entraînée par l'air de prélèvement circulant à travers la conduite (66) d'alimentation en air de prélèvement et étant couplée au compresseur frigorifique (60) de l'appareil frigorifique (56).

9. Procédé selon la revendication 8,
dans lequel l'appareil frigorifique (56) comprend un liquéfacteur (62) de fluide frigorigène et/ou une soupape de détente (64), dans lequel, de préférence, l'énergie de refroidissement provenant de l'air dynamique circulant à travers un canal (14) d'air dynamique est délivrée vers le liquéfacteur (62) de fluide frigorigène qui est thermiquement couplé au canal (14) d'air dynamique.

10. Procédé selon la revendication 8 ou 9,
dans lequel l'air ambiant circulant à travers la conduite (12) d'alimentation en air ambiant est refroidi au moyen d'un dispositif (32) de refroidissement d'air ambiant sous la forme d'un évaporateur de fluide frigorigène disposé dans le circuit frigorifique (58) de l'appareil frigorifique (56).

11. Procédé selon l'une quelconque des revendications 8 à 10, comprenant en outre l'étape consistant à :
- évacuer l'air de prélèvement délivré vers la turbine (70) d'air de prélèvement via la conduite (66) d'alimentation en air de prélèvement, après avoir passé la turbine (70) d'air de prélèvement, vers l'atmosphère ambiante (40) via une conduite (78) d'évacuation d'air de prélèvement raccordée à la turbine (70) d'air de prélèvement et pouvant être raccordée à l'atmosphère ambiante (40), dans lequel la conduite (78) d'évacuation d'air de prélèvement s'ouvre de préférence dans le canal (14) d'air dynamique.

12. Procédé selon l'une quelconque des revendications 8 à 11,
dans lequel un compresseur (18) d'air ambiant et un prérefroidisseur (26) sont disposés dans la conduite (12) d'alimentation en air ambiant, dans lequel le compresseur (18) d'air ambiant comprend de préférence une pluralité d'étages (18a, 18b) de compresseur, et/ou dans lequel, de préférence, l'énergie de refroidissement provenant de l'air dynamique circulant à travers le canal (14) d'air dynamique est délivrée vers le prérefroidisseur (26) qui est thermiquement couplé au canal (14) d'air dynamique.

13. Procédé selon la revendication 12,
dans lequel la turbine (70) d'air de prélèvement entraîne le compresseur (18) d'air ambiant.
